# EUROPÄISCHE PATENTSCHRIFT

(11) **EP 1 040 555 B1**
(45) Veröffentlichungstag und Bekanntmachung des Hinweises auf die Patenterteilung: **09.03.2005**
(21) Anmeldenummer: 98956755.7
(22) Anmeldetag: 09.12.1998
(51) Int. Cl.: H02M 1/12

(54) **STROMRICHTERSCHALTUNGSANORDNUNG MIT EINEM GLEICHSPANNUNGSZWISCHENKREIS**
CONVERTER CONNECTION ASSEMBLY WITH A DIRECT VOLTAGE INTERMEDIATE CIRCUIT
ENSEMBLE CIRCUIT CONVERTISSEUR DE COURANT PRESENTANT UN CIRCUIT INTERMEDIAIRE A TENSION CONTINUE

(30) Priorität: 23.12.1997 DE 19757452
(43) Veröffentlichungstag der Anmeldung: 04.10.2000
(73) Patentinhaber: ABB Schweiz AG, 5400 Baden (CH)
(72) Erfinder: STEMMLER, Christoph, CH-5402 Baden (CH); STULZ, Christian, CH-8008 Zürich (CH)
(74) Vertreter: ABB Patent Attorneys
(86) Internationale Anmeldenummer: PCT/CH1998/000520
(87) Internationale Veröffentlichungsnummer: WO 1999/034500

(56) Entgegenhaltungen:
- EP-A- 0 534 285
- EP-A- 0 682 402
- EP-A- 0 758 161
- DE-U- 29 506 951
- US-A- 5 661 390
- PATENT ABSTRACTS OF JAPAN vol. 17, no. 625 (E-1461), 18. November 1993 & JP 05 191976 A (NEMITSUKU RAMUDA), 30. Juli 1993
- OGASAWARA ET AL: "measurement and reduction of emi radiated by a pwm inverter-fed ac motor drive system" IAS'96-CONFERENCE RECORD OF THE 1996 IEEE INDUSTRY APPLICATIONS, 6. - 10. Oktober 1996, Seiten 1072-1079, XP000731236 san diego
- PATENT ABSTRACTS OF JAPAN vol. 97, no. 7, 31. Juli 1997 & JP 09 084357 A (YASKAWA ELECTRIC CORPORATION), 28. März 1997

## Beschreibung

### Technisches Gebiet

Die Erfindung bezieht sich auf das Gebiet der Leistungselektronik. Sie geht aus von einer Stromrichterschaltungsanordnung gemäss dem Oberbegriff des ersten Anspruchs.

### Stand der Technik

Gattungsgemässe Stromrichterschaltungsanordnungen werden beispielsweise in den Europäischen Patentanmeldungen EP 0 682 402 und EP 0 758 161 sowie in der Offenlegungsschrift DE 196 07 201 A1 beschrieben. Eine solche Stromrichterschaltungsanordnung umfasst einen ersten Stromrichter, der vorzugsweise über einen Transformator an ein dreiphasiges Spannungsversorgungsnetz angeschlossen sein kann. Der erste Stromrichter formt die Wechselspannung in eine Gleichspannung um, kann gleichzeitig aber auch Energie in beiden Richtungen fliessen lassen. Die Gleichspannung speist einen Gleichspannungszwischenkreis, der im wesentlichen durch eine Kondensatorbank gebildet wird. An den Gleichspannungszwischenkreis ist ein zweiter Stromrichter angeschlossen, der eine Last wie zum Beispiel einen Motor antreibt. Der Motor ist insbesondere als Drehfeldmaschine ausgebildet. Zum Antreiben von Drehfeldmaschinen werden heute meistens Frequenzumrichter mit Gleichspannungszwischenkreis (U-Umrichter) verwendet. Diese Umrichter erzeugen grundsätzlich neben der erwünschten symmetrischen Dreiphasenspannung immer auch eine unerwünschte aber unvermeidbare asymmetrische, sogenannte Commonmode-Spannung. Diese Commonmode-Spannung treibt einen Erdstrom, der dadurch hervorgerufen wird, dass die parasitären Kapazitäten zwischen Umrichter und Erde (vor allem hervorgerufen durch geschirmte Kabel) durch die Commonmode-Spannung andauernd auf- und entladen werden. Der Erdstrompfad wird gebildet durch: Umrichter - Erdungspunkt - Erdleitersystem - parasitäre Erdkapazitäten - Umrichter. Moderne System sind möglichst verlustarm ausgelegt. Dies gilt dann natürlich auch für den Erdstrom und führt dazu, dass im Erdstrompfad eine Schwingung angeregt wird und der Strom eine beträchtliche Amplitude erreicht. Dadurch entsteht eine grosse Zusatzbelastung der Umrichterkomponenten. Ausserdem werden durch die Überlagerung des symmetrischen Stromes mit den Erdstromspitzen die Überstromschutzschwellen ausgelöst. Um dies zu vermeiden, müsste der gesamte Umrichter stark überdimensioniert werden. In der Vergangenheit war dies nicht derart problematisch, da die Halbleiterschalter nur sehr langsam schalteten, so dass die Zusatzverluste nur geringe Ausmasse annahmen. Das Problem verschärft sich aber mit zunehmender Schaltfrequenz und Schaltflankensteilheit. Mit den heute möglichen hohen Schaltfrequenzen sind somit technische Massnahmen zur Dämpfung der Commonmode-Spannung erforderlich. Deshalb wird in DE 196 07 201 A1 ein Störschutzfilter in den Zwischenkreis eingefügt. Das Filter besteht aus einem Transformator und einem Satz von Filterkondensatoren. Die eine Wicklung des Transformators ist in den Pluspfad, die andere in den Minuspfad des Zwischenkreises geschaltet, so dass der asymmetrische Erdstrom den Transformatorkern magnetisiert und dadurch der Erdstrom unterdrückt wird.

Die beschriebene Stromrichteranordnung ist vor allem für Anwendungen im Niederspannungsbereich, d. h. mit Nennspannungen unter 1 kV, geeignet. Sie hat den Nachteil, dass damit keine beliebigen Drehfeldmaschinen angesteuert werden können: Aufgrund der Schaltvorgänge im zweiten Stromrichter entstehen nichtsinusförmige Spannungen an den Motorklemmen und durch die kapazitive Erdung über die Filterkondensatoren führt die Commonmode-Spannung zu Spannungsspitzen zwischen dem Motor und der Erde. Dadurch werden aufwendigere Motorkonstruktionen nötig, die auch bei nichtsinusförmigen Spannungen verwendet werden können.

In US 5,661,390 wird eine Stromrichterschaltungsanordnung mit einem ersten und einem zweiten Stromrichter, einem Gleichspannungszwischenkreis und einem ersten und einem zweiten Transformator angegeben. Drei Wicklungen des ersten Transformators sind je in einen Leiter zwischen dem ersten Stromrichter und einem Netz geschaltet. Drei Wicklungen des zweiten Transformators sind je in einen Leiter zwischen dem zweiten Stromrichter und einer Last geschaltet. Zwischen die Last und den zweiten Stromrichter ist ein LC-Filter geschaltet, welches über einen Widerstand und eine vierte Wicklung des zweiten Transformers geerdet ist. Die Schaltungsanordnung dient zur Unterdrückung von Strömen im Hochfrequenzbereich, eliminert Commonmode-Spannungen am Motor jedoch nicht.

JP 5191976 zeigt einen Drosseltransformator mit zwei Wicklungen, die so in einen Gleichspannungszwischenkreis einer Stromrichteranordnung geschaltet sind, dass ein einer Wicklung in Richtung einer Last fliessender Strom den Transformator in die gleiche Richtung magnetisiert wie ein in der anderen Wicklung in Richtung der Last fliessender Strom.

DE 295 06 951 U1 zeigt einen entsprechenden Drosseltransformator mit drei Wicklungen, der zwischen einen Stromrichter und ein Versorgungsnetz geschaltet ist. Commonmode-Spannungsspitzen an einem Verbraucher werden jedoch nicht eliminiert.

EP 534 285 zeigt einen Dreipunkt-Zwischenkreis eines Stromrichters, bei dem Schwankungen in der Mittelpunktspannung durch Teilsaugkreise reduziert werden.

### Darstellung der Erfindung

Aufgabe der Erfindung ist es, eine Stromrichterschaltungsanordnung anzugeben, mit der auch Standardmotoren, z. B. solche, die auf eine sinusförmige Klemmenspannung angewiesen sind, gespiesen werden können. Zudem soll die Schaltung im Mittel- und Hochspannungsbereich verwendet werden können. Diese Aufgabe wird durch eine Stromrichterschaltungsanordnung mit den Merkmalen des unabhängigen Anspruchs gelöst.

Erfindungsgemäss geschieht dies durch ein Filter mit geerdetem Sternpunkt, das zwischen den zweiten Stromrichter und die Last geschaltet ist. Dadurch entsteht eine sinusförmige Spannung an der Last. Dies erlaubt die Speisung beliebiger Drehfeldmaschinen.

Dadurch kann die erfindungsgemässe Stromrichteranordnung auch im Retrofit bestehender Anlagen eingesetzt werden, weil die bestehenden Maschinen nicht ersetzt werden müssen. Ein solcher Ersatz alter Stromrichteranlagen erlaubt markante Energieeinsparungen, indem die Antriebe z. B. drehzahlvariabel gefahren werden.

Im Zwischenkreis ist ein Transformator mit mindestens zwei Wicklungen angeordnet. Die eine Wicklung ist in den Pluspfad, die andere in den Minuspfad geschaltet. Die Wicklungen sind miteinander magnetisch gekoppelt und parallel geschaltet. Diese Massnahme beeinflusst lediglich die unerwünschten, asymmetrischen Stromkomponenten, die in beiden Wicklungen in dieselbe Richtung fliessen. Dadurch wird der Kern des Transformators magnetisiert und die Commonmode-Ströme unterdrückt. Die erwünschten symmetrischen Stromkomponenten, die in der einen Wicklung in eine Richtung und in der zweiten Wicklung in entgegengesetzter Richtung fliessen, werden kaum beeinflusst.

Der Transformator kann auch in die Strompfade zwischen der Speisung und dem ersten Stromrichter oder in die Strompfade zwischen dem zweiten Stromrichter und der Last geschaltet werden.

Ein bevorzugtes Ausführungsbeispiel, bei dem der Transformator wirtschaftlicher gestaltet werden kann, zeichnet sich dadurch aus, dass eine dritte, mit den ersten beiden ebenfalls magnetisch gekoppelte Wicklung vorgesehen ist, an die ein Dämpfungswiderstand angeschlossen ist. Die Commonmode-Ströme induzieren somit in der dritten Wicklung eine Spannung, die im Widerstand dissipiert wird.

Weitere vorteilhafte Ausführungsformen ergeben sich aus den entsprechenden abhängigen Ansprüchen.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Eine schematische Darstellung eines bevorzugten Ausführungsbeispiels;
- **Fig. 2**: Eine schematische Darstellung einer zweiten Ausführungsform;
- **Fig. 3**: Eine schematische Darstellung einer dritten Ausführungsform.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

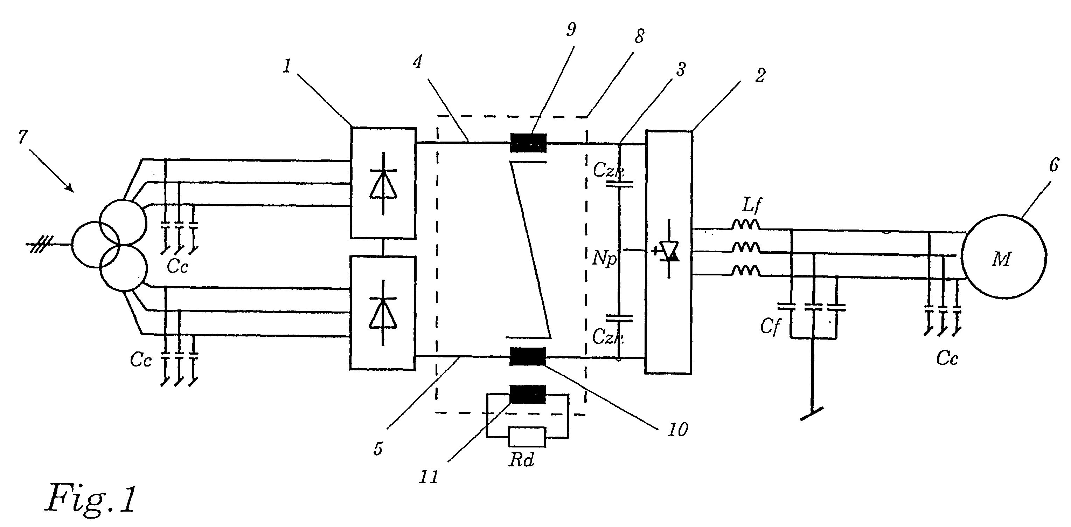

Figur 1 zeigt schematisch ein Ausführungsbeispiel der Erfindung. Mit 7 ist ein dreiphasiges Spannungsversorgungsnetz bezeichnet, das über einen Netztransformator mit einem ersten Stromrichter 1 verbunden ist. Die dreiphasigen geschirmten Verbindungskabel bilden nicht dargestellte Kabelinduktivitäten und Kabelkapazitäten Cc. Im Stromrichter 1 wird die Wechselspannung des Spannungsversorgungsnetzes 7 in eine Gleichspannung umgewandelt. Ein Gleichspannungszwischenkreis 3 umfasst Zwischenkreiskondensatoren Czk, die an einen Pluspfad 4 und einen Minuspfad 5 angeschlossen sind. An den Zwischenkreis 3 ist ein zweiter Stromrichter 2 angeschlossen, der die Gleichspannung wieder in eine Wechselspannung variabler Frequenz und Amplitude umwandelt.

Im gezeigten Ausführungsbeispiel umfasst der zweite Stromrichter 2 einen Dreipunktwechselrichter. Demzufolge sind auch zwei in Serie geschaltete Zwischenkreiskondensatoren Czk vorgesehen, die an ihrem gemeinsamen Knotenpunkt einen Neutralpunkt Np bilden. Der Stromrichter 2 treibt eine Last 6, zum Beispiel einen drehzahlvariablen Motor M. Die Anschlusskabel zwischen Last 6 und Stromrichter 2 bilden wiederum Kabelkapazitäten Cc und nicht dargestellte Kabelinduktivitäten. Zwischen der Last 6 und dem Stromrichter 2 ist erfindungsgemäss ein LC-Filter mit einer Filterkapazität Cf und einer Filterinduktivität Lf angeordnet

Im Zwischenkreis ist ein Transformator 8 angeordnet. Der Transformator umfasst mindestens zwei Wicklungen, wobei eine erste Wicklung 9 im Pluspfad 4 und eine zweite Wicklung 10 im Minuspfad 5 angeordnet ist. Die Schaltung funktioniert wie folgt: Das LC-Filter filtert die Oberschwingungen der erzeugten Wechselrichterspannung heraus, so dass am Motor nur noch die symmetrische Sinusspannung anliegt. Eine Erwärmung des Motors durch die Oberschwingungen entfällt, so dass die Leistung des Antriebs nicht vermindert werden muss. Das LC-Filter wirkt aber praktisch nur auf symmetrische (dreiphasige) Oberwellen. Asymmetrische (gleichphasige oder Commonmode-Spannungs-) Oberwellen werden kaum beeinflusst. Der Filtersternpunkt ist hart geerdet. Dies bewirkt einerseits, dass am Motor keine Commonmode-Spannung anliegt (eine weitere Voraussetzung dafür, dass Standardmotoren verwendet werden können). Andererseits fällt aber die unvermeidliche Commonmode-Spannung zwischen den restlichen Teilen der Schaltungsanordnung (Stromrichter 1, Zwischenkreis, Stromrichter 2, Transformatorkabel, Sekundärwicklung des Transformators) und Erde ab. Dadurch werden die Erdkapazitäten mit der Frequenz der Commonmode-Spannung umgeladen, und es fliesst der eingangs erwähnte unerwünschte Erdstrom.

Im Transformator 8 fliesst der symmetrische Laststrom in der ersten Wicklung 9 in einer Richtung und in der zweiten Wicklung 10 in der entgegengesetzten Richtung. Dadurch wird der Kern des Transformators 8 nicht magnetisiert. Der Laststrom sieht den Transformator 8 somit gar nicht. Der asymmetrische Erdstrom fliesst hingegen in der ersten Wicklung 9 immer in derselben Richtung wie in der zweiten Wicklung 10. Ein beispielsweise in der ersten Wicklung in Richtung der Last Messender Strom ruft die gleiche Richtung der Magnetisierung des Transformators hervor wie ein in der zweiten Wicklung in Richtung der Last fliessender Strom. Dadurch wird der Transformatorkern magnetisiert, und der Erdstrom wirksam unterdrückt. Bei nur zwei Wicklungen wird der Transformator 8 unwirtschaftlich gross. Aus diesem Grund wird vorzugsweise eine dritte Wicklung 11 vorgesehen, die über einen Dämpfungswiderstand Rd abgeschlossen ist. Der Erdstrom induziert somit in dem Dämpfungswiderstand Rd eine Spannung, die dissipiert wird. Auf diese Weise wird der unerwünschte asymmetrische Commonmode-Strom wirksam gedämpft.

Der Transformator 8 hat aber noch eine zweite vorteilhafte Funktion: Er wirkt als Kurzschlussstrombegrenzer im Fehlerfall. Wenn eine Diode im Stromrichter 1 versagt, dann entlädt sich der Zwischenkreiskondensator Czk über den defekten Gleichrichter. Der dadurch entstehende Kurzschlussstrom übt sehr grosse Kräfte auf die Verschienung aus und kann ausserdem den Zwischenkreiskondensator Czk beschädigen. Die Streuinduktivität des Transformators 8 begrenzt diesen Strom auf ein zulässiges Mass.

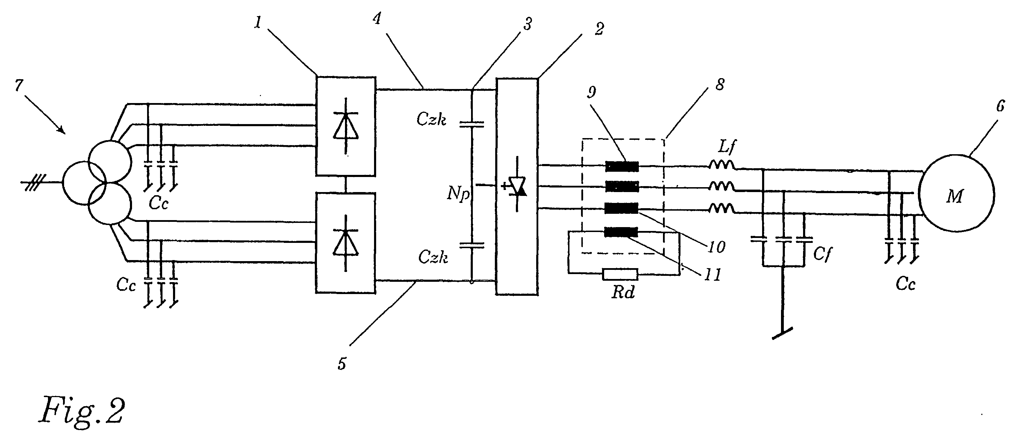

Figur 2 zeigt ein Ausführungsbeispiel, bei dem der Transformator 8 zwischen die Last 6 und den zweiten Stromrichter 2 geschaltet ist. Der Transformator 8 weist in dem dargestellten dreiphasigen Anwendungsfall drei Primärwicklungen (9, 10) und eine dritte Wicklung 11 auf, die wiederum mit einem Dämpfungswiderstand Rd abgeschlossen werden kann.

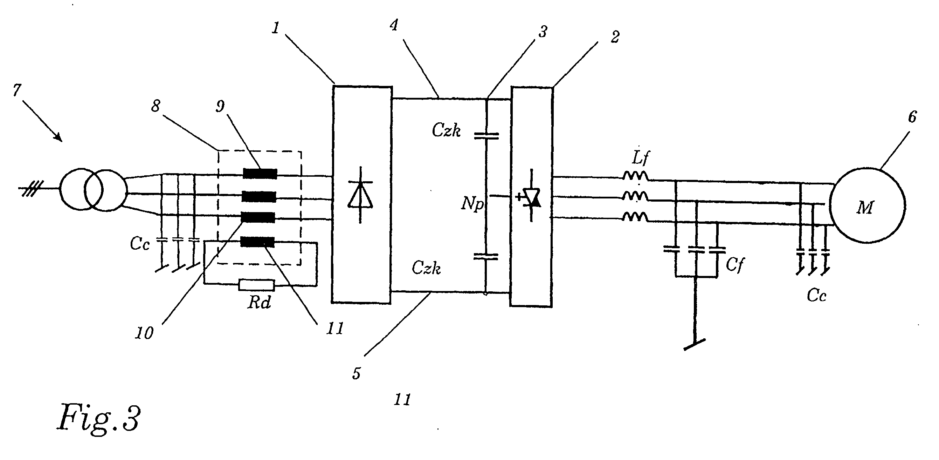

Figur 3 zeigt schliesslich noch ein Ausführungsbeispiel, bei dem der Transformator 8 zwischen dem Spannungsversorgungsnetz 7 und dem ersten Stromrichter 1 angeordnet ist.

Die Erfindung wurde vorstehend am Beispiel eines Dreipunktwechselrichters und eines LC-Filters erläutert worden. Dies ist im Rahmen der Erfindung jedoch nicht Bedingung. Wichtig ist lediglich, dass es sich um einen Umrichter mit Gleichspannungszwischenkreis handelt. Die übrigen Ausführungsformen wie Zweipunktwechselrichter oder Multilevelstromrichter sind im Rahmen der Erfindung ebenfalls möglich.

### Bezugszeichenliste

- 1: erster Stromrichter
- 2: zweiter Stromrichter
- 3: Zwischenkreis
- 4: Pluspfad
- 5: Minuspfad
- 6: Last
- 7: Spannungsversorgungsnetz
- 8: Transformator
- 9: erste Wicklung
- 10: zweite Wicklung
- 11: dritte Wicklung

- Rd: Dämpfungswiderstand
- Cc: Kabelkapazität
- Czk: Zwischenkreiskondensator
- Np: Neutralpunkt
- Lf: Filterinduktivität
- Cf: Filterkapazität
- M: Motor

## Patentansprüche

1. Stromrichterschaltungsanordnung mit
(a) einem ersten Stromrichter (1), der an ein Spannungsversorgungsnetz (7) angeschlossen ist;
(b) einem zweiten Stromrichter (2), der an eine Last (6) angeschlossen ist;
(c) einem Gleichspannungszwischenkreis (3) mit einem Pluspfad (4) und einem Minuspfad (5), über welchen Zwischenkreis (3) der erste Stromrichter (1) mit dem zweiten Stromrichter (2) verbunden ist;
(d) einem Transformator (8) mit mindestens zwei, miteinander magnetisch gekoppelten Wicklungen (9 und 10), wobei
- je eine Wicklung in je einen der Leiter zwischen dem Spannungsversorgungsnetz (7) und dem ersten Stromrichter (1), oder
- je eine Wicklung in den Pluspfad (4) und eine in den Minuspfad (5) des Zwischenkreises (3), oder
- je eine Wicklung in je einen der Leiter zwischen dem zweiten Stromrichter (2) und der Last (6)
geschaltet ist
**dadurch gekennzeichnet, dass**
(e) zwischen die Last (6) und den zweiten Stromrichter (2) ein geerdetes LC-Filter (Lf, Cf) eingeschaltet ist, dessen Filterinduktivitäten (Lf) in die Leiter zwischen dem zweiten Stromrichter (2) und der Last (6) geschaltet sind, und dessen Filterkapazitäten (Cf) zwischen diese Leiter und eine gemeinsame Erdung geschaltet sind.

2. Stromrichterschaltungsanordnung nach Anspruch 1, **dadurch gekennzeichnet, dass** die Wicklungen des Transformators (8) parallel orientiert sind, so dass ein in einer Wicklung in Richtung der Last fliessender Strom die gleiche Richtung der Magnetisierung des Trafos hervorruft wie ein in einer anderen Wicklung in Richtung der Last fliessender Strom.

3. Stromrichterschaltungsanordnung nach Anspruch 1 oder 2, **dadurch gekennzeichnet, dass** der Transformator (8) eine dritte Wicklung (11) umfasst, die mit den ersten beiden Wicklungen (9 und 10) ebenfalls magnetisch gekoppelt ist und die über einen Dämpfungswiderstand (Rd) abgeschlossen ist.

4. Stromrichterschaltungsanordnung nach Anspruch 1 oder 2, **dadurch gekennzeichnet, dass** der zweite Stromrichter (2) eine Dreipunktwechselrichtertopologie aufweist und ein Neutralpunkt (Np) durch zwei zwischen dem Plus- und dem Minuspfad in Serie geschaltete Zwischenkreiskondensatoren (Czk) gebildet wird.

## Claims

1. Converter circuit arrangement having
(a) a first converter (1) which is connected to a voltage supply network (7);
(b) a second converter (2) which is connected to a load (6);
(c) a DC intermediate circuit (3) having a positive path (4) and having a negative path (5), via which intermediate circuit (3) the first converter (1) is connected to the second converter (2);
(d) a transformer (8) having at least two windings (9 and 10) which are magnetically coupled to one another, in which case
- in each case one winding is connected in each case in one of the conductors between the voltage supply network (7) and the first converter (1), or
- in each case one winding is connected in the positive path (4) and one in the negative path (5) of the intermediate circuit (3), or
- in each case one winding is connected in each case in one of the conductors between the second converter (2) and the load (6)
**characterized in that**
(e) an earthed LC filter (Lf, Cf) is connected between the load (6) and the second converter (2), whose filter inductances (Cf) are connected in the conductors between the second converter (2) and the load (6), and whose filter capacitances (Cf) are connected between these conductors and a common earth.

2. Converter circuit arrangement according to Claim 1, charcterized in that the windings of the transformer (8) are oriented parallel, so that a current flowing in one winding in the direction of the load produces the same transformer magnetization direction as a current flowing in another winding in the direction of the load.

3. Converter circuit arrangement according to Claim 1 or 2, **characterized in that** the transformer (8) has a third winding (11) which is likewise magnetically coupled to the first two windings (9 and 10) and is terminated by an attenuating resistor (Rd).

4. Converter circuit arrangement according to Claim 1 or 2, **characterized in that** the second converter (2) has a three-point inverter topology, and a neutral point (Np) is formed by two intermediate-circuit capacitors (Czk) which are connected in series between the positive path and the negative path.

## Revendications

1. Agencement de circuit convertisseur de courant qui présente:
(a) un premier convertisseur de courant (1) qui est raccordé à un réseau (7) d'alimentation en tension,
(b) un deuxième convertisseur de courant (2) qui est raccordé à une charge (6),
(c) un circuit intermédiaire (3) à tension continue qui présente un parcours positif (4) et un parcours négatif (5) et par l'intermédiaire duquel le circuit intermédiaire (3) du premier convertisseur de courant (1) est relié au deuxième convertisseur de courant (2),
(d) un transformateur (8) qui présente au moins deux bobinages (9 et 10) couplés magnétiquement l'un à l'autre, dans lequel:
- chaque bobinage est raccordé à un conducteur respectif qui relie le réseau d'alimentation (7) en tension et le premier convertisseur de courant (1) ou
- un bobinage est raccordé dans le parcours positif (4) et l'autre dans le parcours négatif (5) du circuit intermédiaire (3) ou
- chaque bobinage est raccordé à un conducteur respectif qui relie le deuxième convertisseur de courant (2) et la charge (6),
**caractérisé en ce que**
(e) un filtre LC (Lf, Cf) raccordé à la terre est raccordé entre la charge (6) et le deuxième convertisseur de courant (2), ses inductances de filtre (Lf) étant montées dans les conducteurs entre le deuxième convertisseur de courant (2) et la charge (6), et ses capacités de filtre (Cf) étant montées entre ces conducteurs et une mise à la terre commune.

2. Agencement de circuit convertisseur de courant selon la revendication 1, **caractérisé en ce que** les bobinages du transformateur (8) sont orientés en parallèle de sorte qu'un courant qui s'écoule dans un bobinage en direction de la charge provoque dans le transformateur une magnétisation dans la même direction qu'un courant qui s'écoule dans un autre bobinage en direction de la charge.

3. Agencement de circuit convertisseur de courant selon les revendications 1 ou 2, **caractérisé en ce que** le transformateur (8) comprend un troisième bobinage (11) qui est également couplé magnétiquement aux deux premiers bobinages (9 et 10) et qui est relié à une résistance d'atténuation (Rd).

4. Agencement de circuit convertisseur de courant selon les revendications 1 ou 2, **caractérisé en ce que** le deuxième convertisseur de courant (2) présente une topologie d'onduleur à trois points, un point neutre (Np) étant formé par deux condensateurs (Czk) du circuit intermédiaire raccordés en série entre le parcours positif et le parcours négatif.
